Europäisches Patentamt

European Patent Office

Office européen des brevets

(19)

(11) Publication number : **0 501 812 A2**

(12) **EUROPEAN PATENT APPLICATION**

(21) Application number : **92301694.3**

(22) Date of filing : **28.02.92**

(51) Int. Cl.⁵ : **G06F 15/72, G06F 15/60**

(30) Priority : **01.03.91 US 663333**

(43) Date of publication of application :
**02.09.92 Bulletin 92/36**

(84) Designated Contracting States :
**DE GB NL**

(71) Applicant : **GENERAL ELECTRIC COMPANY**
**1 River Road**
**Schenectady, NY 12345 (US)**

(72) Inventor : **Cline, Harvey Ellis**
**845 Harris Drive**
**Schenectady, New York 12309 (US)**
Inventor : **Lorensen, William Edward**
**14 Hearthside Drive**
**Ballston Lake, New York 12019 (US)**
Inventor : **Ludke, Siegwalt**
**10 Dawn Drive**
**Scotia, New York 12302 (US)**

(74) Representative : **Pratt, Richard Wilson**
**London Patent Operation G.E. Technical**
**Services Co. Inc. Essex House 12/13 Essex**
**Street**
**London WC2R 3AA (GB)**

(54) **Simulated surgery using display list surface data.**

(57)    A method of separating three-dimensional images formed from display lists operates directly on the display lists of the surfaces without the need to re-compile the original data values. The image is first rotated so that the volume to be cut extends perpendicularly to the face of the display. A polygon drawn on the image defines the remaining two dimensions of the cut volume. As the display list is mapped to pixels of a two-dimensional image plane for display, the coordinates of the pixels on the two dimensional image plane are used to address a cut buffer holding the defined cut polygon. The value in the cut buffer determines whether or not each point of the display list is to be cut. The cut and uncut data may be separately displayed.

Fig. 9

EP 0 501 812 A2

## BACKGROUND OF THE INVENTION

The present invention is directed generally to a system and method for displaying and manipulating images of surface data

In conventional x-ray systems, two-dimensional shadow images are created based upon the different absorption characteristics of bone and soft tissues. An improvement in diagnostic capability has been provided by computed tomographic systems (CT systems) which are x-ray based and may be used to produce two-dimensional views depicting transverse slices of a body, object, or patient being investigated. By collecting data for a number of contiguous slices, three-dimensional information may be obtained.

In the same way, the newer magnetic resonance (MR) imaging technology is capable of generating three-dimensional arrays of data representing physical properties of interior bodily organs. Moreover, MR systems discriminate better between various tissue types, not just between bone and soft tissue. MR imaging systems are also capable of generating physiological data rather than just absorption data.

The three-dimensional information from either system may be viewed as a series of slice images, with the inferential abilities of the viewer employed to envision the three dimensions of the various internal organs. Alternatively, a shaded and contoured three-dimensional image may be generated by computer.

The display of three-dimensional images has been principally driven by the computer aided design (CAD) and computer aided manufacturing (CAM) industries. Systems have been developed for displaying solid models for manufactured parts, and for rotating and viewing these parts from different directions. In one system an image is generated on a screen or other display device as a collection of individual picture elements (pixels) whose intensity and color provide depth information.

In such systems, the three-dimensional data, from which the image is generated, must be mapped to the two dimensional image plane of the display device. One method for performing this mapping is termed "ray tracing" and requires that the data points lying along rays regularly dispersed about an observation point be examined. The foremost data point along each ray, with respect to the observation point, determines the surface that will be displayed and a pixel associated with each such data point is generated in the image plane. The shading of the pixel is determined by estimating the distance of the foremost data point from the observation point and the deviation of the surface normal at the foremost data point from the ray. The surface normal is a line extending perpendicularly from the surface at that data point.

One advantage of the ray tracing method is that it provides high resolution and realistic shading of three-dimensional surfaces. One disadvantage is that any relative movement of the observation point, such as may be caused by a rotation of the image, typically requires recalculation of the rays for each data point in the array.

The time required to repeat the ray tracing calculations slows the speed with which the image may be manipulated by the user, thus limiting interaction between the user and the imaging system.

An improved method of mapping three-dimensional data to an image plane and of determining the shading of each pixel is described in U.S. Patent 4,719,585 entitled: "Dividing Cubes System and Method for the Display of Surface Structures Contained within the Interior Region of a Solid Body", assigned to the assignee of the present invention and hereby incorporated by reference. In the disclosed "dividing cubes" method, the three-dimensional data is first analyzed to identify volume elements (voxels) comprised of adjacent vertex data points which straddle a surface of interest. The surface of interest is defined with respect to the physical properties measured by the data points. The spatial coordinates of each vertex of the selected voxels are collected in a "display list" along with a "gradient normal" which is calculated for each vertex. The gradient normal indicates the orientation of the gradient of the physical properties at that vertex point and is determined by examining the values of the three data points outside the given voxel but adjacent to a given vertex point. The dividing cubes method also teaches a method for interpolating between vertex points to increase the apparent resolution of the resultant image.

The dividing cubes method provides two advantages over conventional ray tracing. First, the dividing cubes method provides faster manipulation and generation of images. The display list holds only the data needed to describe the surface of the structure of interest, speeding operations such as rotation and scaling. Also, the use of a gradient normal to approximate the surface normal of the structure at various points is computationally efficient and allows rapid generation of shading information.

Second, there is no required relationship between the order of the points in the display list produced by the dividing cubes method and the coordinates of those points in the original data array. Thus, several display lists representing different surfaces of bone and tissue may be combined simply by concatenating one display list to the end of the other without sorting or reordering either display list. This is a considerable advantage in generating composite images from several display lists.

In a display list such as produced by the dividing cubes method, however, it is somewhat difficult to identify data within a particular volume because such data may be distributed arbitrarily throughout the display list. Thus, "cutting" the image, by identifying and removing data points in a predefined volume, for example, may involve testing the coordinates of each data point in the display list against a set of ranges defining that volume. For points in three dimensions, six tests must be performed on each data point, i.e., one test for an upper and lower range as repeated for each of three Cartesian coordinates. This process is cumbersome and time consuming.

The definition of the ranges describing the predefined volume is generally non-intuitive and may require complex calculation and substantial trial and error, especially if the predefined volume lies along an axis oblique to the axes of the Cartesian coordinate system of the original data array.

Nevertheless, the ability to identify and separate portions of an image associated with data in a display list, based on the spatial location of the data points in that display list, would be valuable in permitting more detailed understanding of the imaged surfaces. For example, the ability to cut three-dimensional images and remove portions of the surfaces depicted would allow surgeons to plan detailed and complicated surgical procedures using totally non-invasive diagnostic methods. Surgery could be simulated by "cutting" the images of the three-dimensional surfaces to determine an appropriate trajectory, such as one which would avoid organs or large blood vessels.

For such simulated surgery to find widespread acceptance, however, the associated imaging system must be easy to operate and fast enough to permit near "real time" manipulation of the images.

## SUMMARY OF THE INVENTION

The present invention provides an efficient method of cutting surfaces described by a display list of points in three dimensions as produced by the dividing cubes or similar image generation method. The method of the invention operates directly on the display list and the original data array, from which the display list was compiled, need not be consulted. Further, the method of the invention may be readily integrated into conventional image processing procedures and may be implemented in high speed dedicated circuitry. The invention also offers a simple and intuitive method for describing the volume to be cut.

Specifically, a mapping unit receives the display list of points and generates image plane coordinates for each point. These image plane coordinates are used to address a cut buffer storing a polygon defining the outline in the image plane of the volume to be cut. The area inside the polygon is indicated in the cut buffer by a stored first value.

During the mapping of the display list to the image plane, the image plane coordinates are used to address the cut buffer and if the first value is stored at the indicated address of the cut buffer, the point being mapped is stored in a new display list of cut points.

It is one object of the invention to provide a simple method of separating points of a display list into a second display list of cut points. The image plane coordinates used by the invention are available from pre-existing image display routines, and the additional step of addressing the cut buffer to check whether each point is "cut" or not adds little time to this process. The two-dimensional polygon stored in the cut buffer provides a simple definition of two dimensions of the cut volume and may be easily entered interactively by a cursor control device such as a track ball.

The display list may be first transformed by rotating the coordinates of its points so that the points parallel to a cut axis, defining the third dimension of the cut volume, map to a single pixel in the image plane. Thus the third dimension of the cut volume may be assumed to lie perpendicular to the image plane.

It is another object of the invention to provide a simple and intuitive method of defining a three-dimensional cut volume using a two-dimensional display. The rotation of the display list permits definition of the third axis of the cut volume to be perpendicular to the plane of the two-dimensional display. The polygon, lying parallel to the image plane, defines the other two dimensions. The volume to be cut is readily understood by viewing the rotated image with the polygon superimposed on the image. The depth of the cut along the cut axis may be controlled by previously eliminating points on one side of a predefined cut plane.

The foregoing and other objects and advantages of the invention will appear from the following description. In the description, reference is made to the accompanying drawings which form a part hereof, and in which there is shown by way of illustration a preferred embodiment of the invention. Such embodiment does not necessarily represent the full scope of the invention, however, and reference is made therefore to the claims herein for interpreting the scope of the invention.

## DESCRIPTION OF THE DRAWINGS

Fig. 1 is a perspective representation of a voxel of data values of measurements of the physical properties of an imaged object at points over three dimensions;

Fig. 2 is a view in elevation of a number of the voxels of Fig. 1 which straddle a defined surface and showing the gradient normals for the vertex points of those voxels;

Fig. 3 is a schematic representation of the mapping of a display list of three-dimensional point vectors of the voxels in Fig. 2, to a two-dimensional image plane for display;

Fig. 4 is representation of a display list generated from the voxels of Fig. 2, showing its structure as a list in computer memory;

Fig. 5 is a representation of the image buffer used to generate a two-dimensional image on a display device from the display list of Fig. 4, showing its structure as an array in computer memory;

Fig. 6 is a representation of the z-buffer used to perform the mapping of the display list of Fig. 4 to the image buffer of Fig. 5, showing its structure as an array in computer memory;

Fig. 7 is a representation of the cut-buffer used to cut the display list of Fig. 4 into separate display lists per the present invention, showing its structure as an array in computer memory;

Fig. 8 is a flow chart of the method of the present invention for cutting three-dimensional surfaces represented by the display lists of Fig. 4;

Fig. 9 is a schematic block diagram showing the method and apparatus of the present invention;

Fig. 10 is a schematic representation of an image on a display device showing the construction of the cut polygon; and

Fig. 11 is a view of an image developed from the cut display list of point vectors contained within the volume defined by the cut polygon of Fig. 12 showing the cut data rotated 90° around the y' axis.

## DETAILED DESCRIPTION OF THE INVENTION

### Acquiring a Three Dimensional Array of Data Values

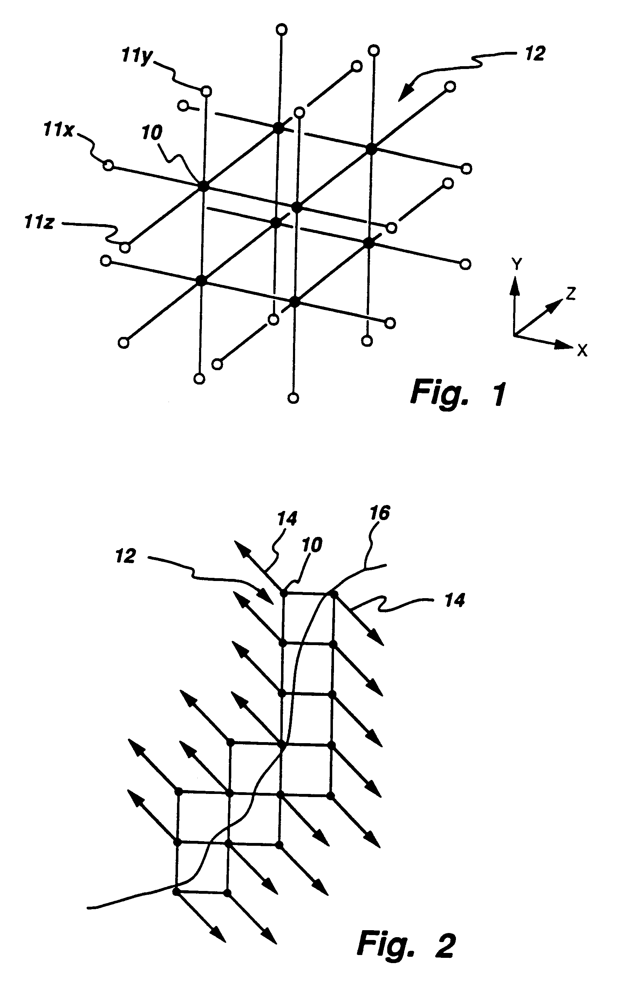

Referring to Fig. 1, a three-dimensional array of data values 10 from a CT or MR system defines a set of voxels 12 of substantially rectangular cross section having one data value at each vertex of the voxel 12. For clarity, data values 10 of voxel 12 are indicated by closed circles and only one is numbered. Each data value 10 has a defined spatial location, given three dimensions of a Cartesian coordinate system, and has a value representing a measured property of an imaged object at that spatial location.

Referring also to Fig. 2, a scaled gradient normal 14 (shown as an arrow) is defined for each data value 10 of the voxel 12 indicating the gradient of the measured property at the location of that data value 10. This scaled gradient normal 14 associated with data value 10 is determined from the data values 11(x), 11(y), and 11(z) (indicated in Fig. 1 as open circles) adjacent to the data value 10 but outside the voxel 12 and displaced from data value 10 along respective axes of the Cartesian coordinate system. The difference between the value of data value 10 and 11(x) is the x component of the gradient normal at data values 10. In a like manner, the difference between the values of data values 10 and 11(y) is the y component of the gradient normal at data value 10. Lastly, the difference between the value of data value 10 and 11(z) is the z component of the gradient normal at data value 10. The resulting vector formed from these three differences is scaled to unit magnitude to form the scaled gradient normal 14 referred to henceforth simply as gradient normal 14.

### Generating a Display List

Referring to Fig. 2, a surface 16 is defined by a threshold value of the measured properties of the imaged object. The voxels 12 are categorized according to: 1) whether all the data values 10 of each voxel 12 have values greater than this threshold or all the data values 10 have values less than this threshold; or 2) whether only some of the data values 10 have values greater than this threshold value and some of the data values 10 have values less than this threshold. Given the assumption that the variation in the measured property of the imaged object is essentially monotonic in space, on the scale of a single voxel 12, this categorization is equivalent to deciding whether the voxel 12 is completely on one side of the surface 16 or whether the voxel 12 straddles the surface 16.

The threshold defining surface 16 is selected by the user. In the medical applications of the present invention, a threshold may be chosen so as to selectively view various body structures. For example, if one wishes to view bony structures, a particular threshold value is chosen. However, if one wishes to view the surface structures of softer tissue, a different threshold value is selected by the user.

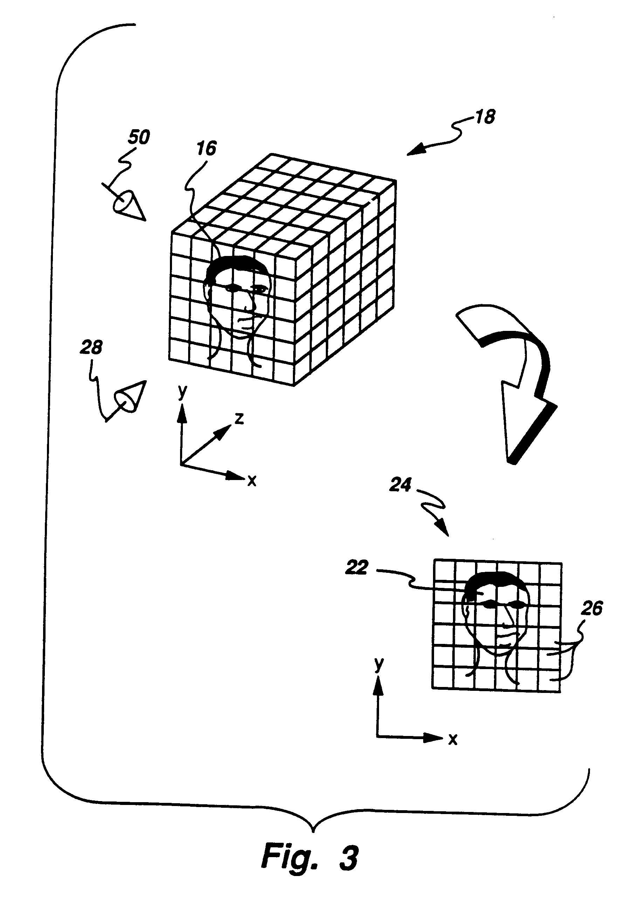

The data values 10 of voxels 12 that straddle the surface 16 are collected into a display list 18 (shown in Fig. 3) along with the gradient normals 14 associated with those data values 10.

The above method of representing a three-dimensional surface is taught in the previously described "dividing cubes" method as cited in the above referenced U.S. Patent.

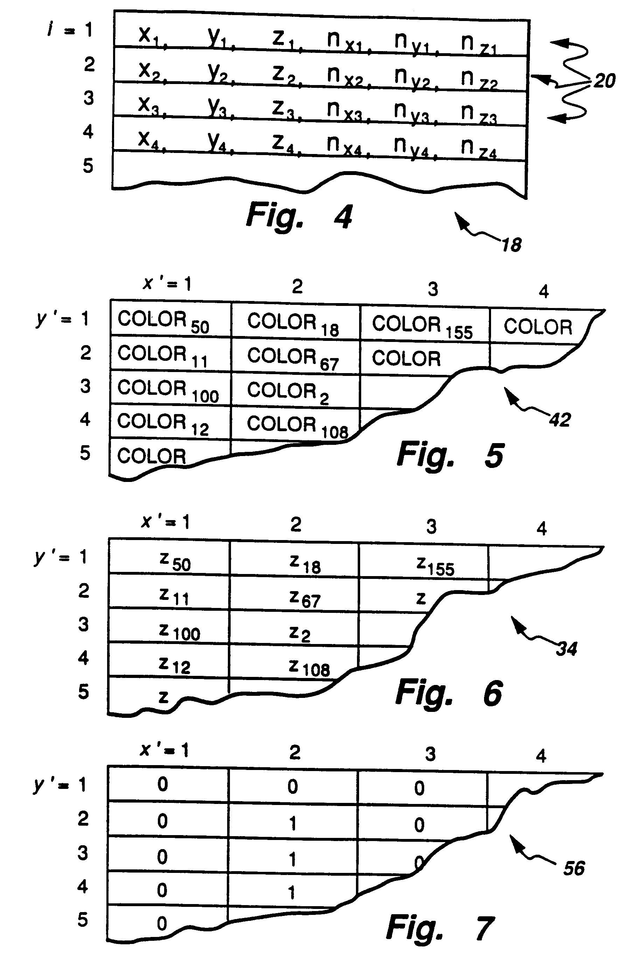

Referring to Fig. 4, the display list 18 is stored in computer memory as a list of point vectors 20 corresponding to data values 10. Each point vector 20 has a sequential list address i and each address i of a point vector 20 in the display list including the spatial coordinates $(x_i, y_i, z_i)$ of a data value 10 of voxel 12 straddling surface 16, along with the gradient normal 14 associated with that data value 10 as represented by the Cartesian components of the scaled gradient normal $(nx_i, ny_i, nz_i)$.

The display list 18 thus includes only the coordinates and the scaled gradient normals 14 of data values 10 on voxels 12 straddling the surface 16. It will be understood, then, that display list 18 will be a limited subset of the data collected in the CT or MR imaging sequence because only the surface 16 of the relevant structure of the imaged object is described and not those data values 10 from voxels 12 wholly inside or outside the surface 16.

## Mapping the Display List to the Image Plane

Referring to Fig. 3, an image 22 is constructed from the display list 18 through a mathematical projection or mapping of the three-dimensional surface 16 represented by the display list 18 onto a two-dimensional image plane 24. The image plane 24 is made up of a rectangular array of picture elements 26 (pixels) each of which has a two-dimensional image plane coordinate $(x', y')$ to be distinguished initially from the three-dimensional spatial coordinates $(x, y, z)$ of the point vectors 20 (Fig. 4) of display list 18.

The process of mapping requires that a viewing axis 28, shown in Fig. 3, be selected to indicate the apparent direction from which the surface 16 is to be observed in its representation as image 22. For convenience this viewing axis 2B is made parallel to the z axis of the display list 18 and rotation of the image 22 is accomplished by transforming the spatial coordinates and gradient normal components of each of the point vectors 20 (Fig. 4) in the display list 18 appropriately as will be described briefly below. This fixing of the viewing axis 28 (Fig. 3) permits the x and y coordinates of the point vectors 20 (Fig. 4) of the display list 18 to be mapped directly to the $x'$ and $y'$ coordinates of the image plane 24 (Fig. 3). Scaling and translation of the image plane 24 are accomplished, again, by transforming the point vectors 20 (Fig. 4) of the display list 18.

Each of these transformation processes of rotation, translation and scaling involves multiplying the spatial coordinates and normal components in each address of point vector 20 by a 4x4 transformation matrix to produce a new vector with coordinates and normal values appropriately transformed. These transformation techniques are well known in the art and are described in detail in the text: Fundamentals of Interactive Computer Graphics by James D. Foley et al. (1984).

The display list 18 may also be "clipped" by establishing a cut plane with reference to its spatial coordinates $(x, y, z)$ and discarding all point vectors 20 that fall on one side of the cut plane. A cut plane may generally be described by the equation:

$$Ax + By + cz + D = 0 \quad (1)$$

where A, B, C and D are constants established by the user and x, y, and z are the spatial coordinates of the point vectors 20. Clipping is accomplished by inserting the values of the spatial coordinates of each point vectors 20 into equation (1) and discarding the point vectors 20, for example, where the right hand side of the equation is greater than zero.

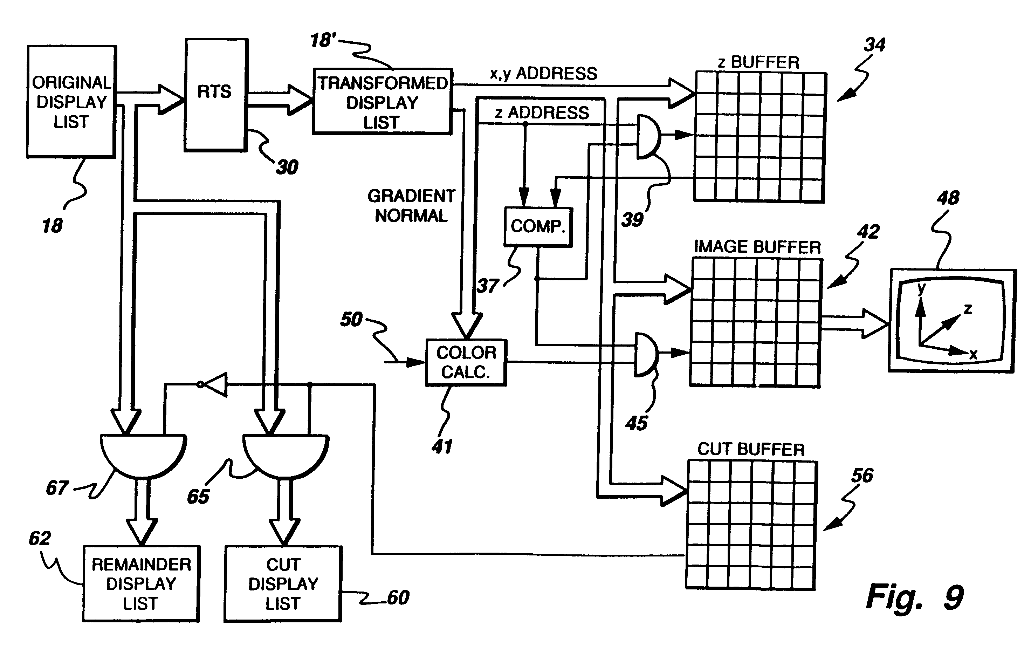

Referring to Fig. 9, this transformation process may be performed by a rotate/translate/scale ("RTS") software routine running on a digital computer or by specialized hardware dedicated to the calculations required for these transformations, both of which are shown generally by RTS block 30. The apparatus of Fig. 9 may be realized completely by software or may be implemented in dedicated circuitry as will be apparent to one of ordinary skill in the art.

Typically, as a result of approximation errors intrinsic to the transformation process, a second transformed display list 18' is created by the RTS block 30 and the original display list 18 is preserved. Subsequent transformations use the original display list 18. The addresses i of the display lists 18 and 18' are not changed by the transformation process so that the corresponding point vectors 20 (Fig. 4) between each list 18 and 18' can be readily identified despite any transformation.

Referring now to Figs. B and 9 the process of mapping the transformed display list 18' to the image plane 24 starts by a reading of the i-th point vectors 20 from transformed display list 18' per process block 32. The x and y spatial coordinates $x_i$ and $y_i$ of this i-th point vector 20 are used to address a memory location in a z-buffer 34.

Referring to Fig. 6, the z-buffer 34 is a two-dimensional array of memory locations, the address of each memory location being identified to a particular pixel 26 of the image plane 24 having coordinates $x', y'$. In the mapping process the coordinates $x_i, y_i$ on the i-th point vector 20 become the image plane coordinates $x', y'$. Each memory location in the z-buffer 34 is initially filled with an arbitrarily large value greater than the maximum expected value $z_i$ of point vector 20 in the transformed display list 18' (Fig. 9).

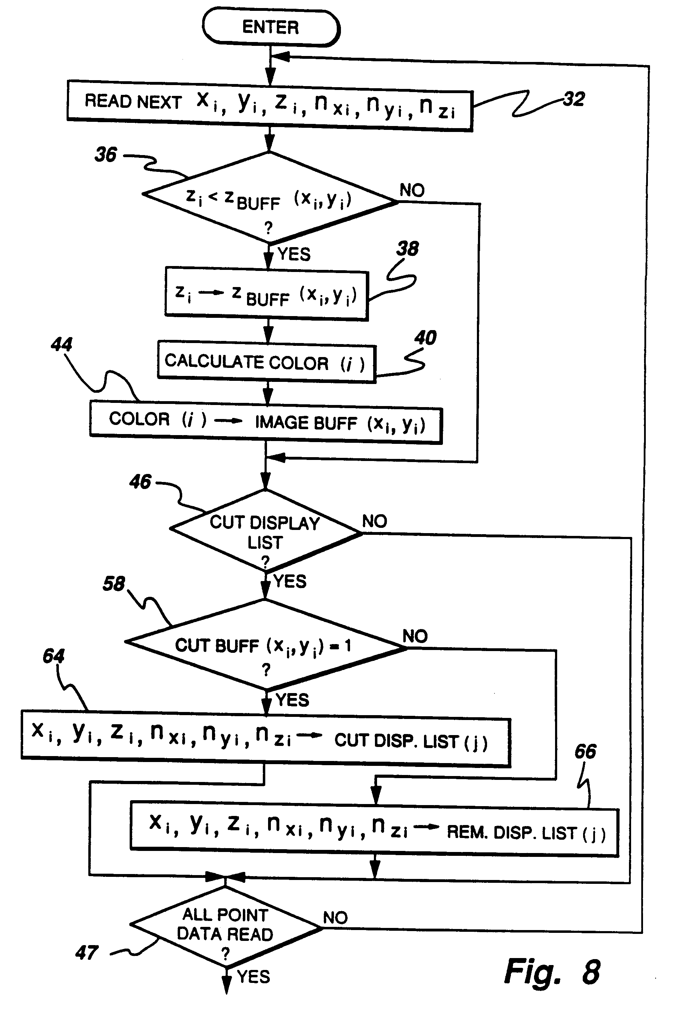

Referring again to Figs. 8 and 9 the value of $z_i$ of the selected i-th point vector 20 is compared to the value in the addressed memory location in the z-buffer 34, zbuff($x_i, y_i$), as indicated by process block 36 in Fig. 8 and performed by corresponding functional block 37 in Fig. 9.

For the initial point vectors 20 (Fig. 4), the value $z_i$ will be less than zbuff($x_i, y_i$) as a result of the initialization of the z-buffer 34 to a large value. In this first case, $z_i$, the z spatial coordinate of the i-th point vector 20, is written over the value in the z-buffer 34 at that memory location so that zbuff($x_i, y_i$) is set equal to $z_i$ as indicated by process block 38 in Fig. 8 and performed by gate 39 in Fig. 9.

Also, in this first case, the gradient normal 14 (Fig. 2) associated with the i-th point vector 20 (Fig. 4) is used to calculate a color(i), for the corresponding pixel 26 in the image plane 24 as indicated by process block 40 in Fig. 8 and functional block 41 in Fig. 9. This process of calculating the color(i) from the gradient normal 14 of the i-th point vector 20 will be described further below.

The color(i) so calculated is stored in an image buffer 42. Referring to Fig. 5, the image buffer 42 is identical in form to the z-buffer 34, being a two-dimensional array of memory locations, the address of each corresponding to a pixel 26 of the image plane 24 and holding the color or shading of that pixel 26.

Referring again to Figs. 8 and 9, in the first case, the calculated color(i) for i-th point vector is stored in the image buffer 42 at address xi, yi in the image buffer 42 determined from the i-th point vector 20 (Fig. 4). Any pre-existing color value in the image buffer 42 is written over so that the value of the image buffer so addressed, $image_{buff}(xi, yi)$ is set equal to color(i). This storing of the color(i) in the image buffer 42 is shown by process block 44 in Fig. 8 and performed by gate 45 in Fig. 9.

In a second case, when the value zi associated with the i-th point vector 20 (Fig. 4) is greater than the value in z-buffer 34, zbuff(xi, yi), as determined by process block 36 in Fig. 8 and performed by function block 37 in Fig. 9, neither the z buffer 34 nor the image buffer 42 is modified.

If the display list is not to be cut, as will be described below, and as determined by decision block 46 of Fig. 8, then the routine jumps to decision block 47 to check if all the point vectors 20 (Fig. 4) have been read. If so, the program ends. If not the program returns to process block 32 and process blocks 32-44 are repeated for the remaining point vectors 20 in the display list 18.

After each point vector 20 (Fig. 4) in the display list 18 is examined, the image buffer 42 will contain the colors only of point vectors 20 having lower values zi than any other point vectors 20 with identical xi and yi spatial coordinates. Thus, only the point vectors 20 having values zi closest to the viewer, as determined by the view axis 28 (Fig. 3) will be displayed. The viewer is assumed to be at low spatial z values looking toward higher spatial z values. The other point vectors 20 at those same xi and yi coordinates will be effectively hidden.

The image buffer 42 will finally contain a representation of the image plane 24 (Fig. 3) and is read to a display device 48 by specialized hardware, as is known in the art, to project a corresponding display of the image 22 on the display device.

Calculating the Pixel Color

Referring to Fig. 3, in the display of surface 16 as image 22 it is very important to provide visual clues to the human eye of the orientation of each element of the surface 16. These visual clues are provided by the color and shading of the pixels 26 of the image plane 24. The more closely the angle of the gradient normal 14 is to the angle viewing axis 28, the lighter is the shading that is applied (at least for positive rather than negative images). Elements of surface 16 which exhibit gradient normals 14 (Fig. 2) with components directed away from the viewing axis 28 represent structures of surface 16 which are not visible and therefore these gradient normals 14 provide a mechanism for eliminating such point vectors 20 (Fig. 4) from the view for a particular viewing angle. Elements of surface 16 having gradient normals 14 with substantial components in a directional orthogonal to the viewing axis 28 are represented by more darkly shaded pixels 26.

The shading for the i-th pixel 26 (Fig. 3) represented by the value of color(i) in the image buffer 42 for that pixel 26, is determined at process block 40 of Fig. 8 and by function block 41 of Fig. 9 by taking the dot product of the gradient normal 14 (Fig. 2) and an illumination axis 51 (Fig. 3) as may be defined by the user. Additionally, true color information may be added by means of a lookup table (not shown) which serves to assign colors (red, green, blue) to each pixel 26 depending upon tissue type revealed from the data values 10 (Fig. 2). The term color as used herein will include both shading and spectral characteristics of the displayed pixel 26.

Generating the Cut Buffer

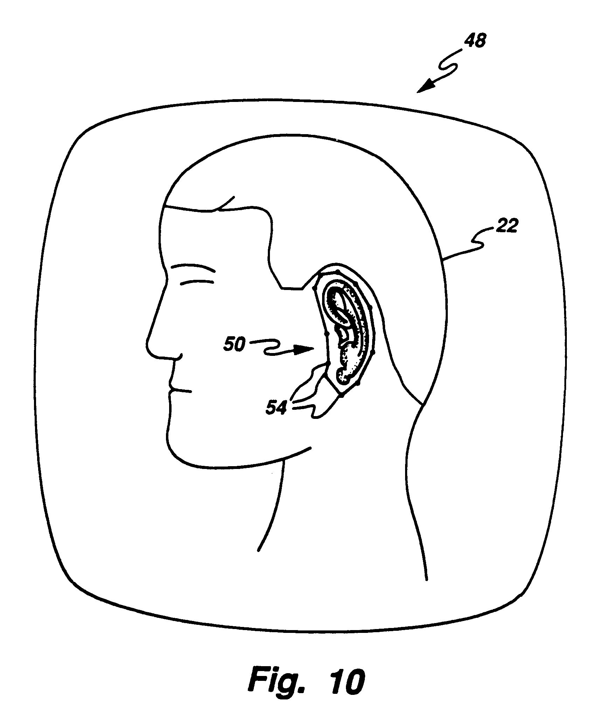

Referring to Fig. 10, prior to cutting the image 22, a polygonal area 50 is traced on the image 22. The polygonal area 50 is entered by moving a cursor (not shown) superimposed on the displayed image 22 by means of a trackball or other control device, as is generally understood in the art, and indicating various points 54 which will form the vertices of the polygonal area 50. For ease of entry, the polygonal area 50 will generally be defined with as few points 54 as necessary; however, the polygonal area 50 may be, in the limit, any continuous closed surface.

Referring to Fig. 7, the coordinates of these points 54 of Fig. 10 are entered into a cut buffer 56, as shown in Fig. 9, which is similar to the z buffer 34 and the image buffer 42 in form, having a memory location corresponding to each pixel 26 (Fig. 3) in the image plane 24 and in the displayed image 22. The memory locations of the cut buffer 56 hold the Boolean values of "one" or "zero" and are initially set to zero. The coordinates of the points 54 of the polygonal area 50 (Fig. 10) are stored in the cut buffer by setting the value of the memory location at the appropriate pixel coordinate to "one".

Once all the vertex points 54 of the polygonal area 50 are entered, the points inside of the polygonal area 50 as represented in the cut buffer 56 are also set to "one" by well understood polygon filling algorithms.

As the values of memory location in the cut buffer 56 are set to one, the colors stored in the image buffer at those same coordinates are set to a contrasting color value to clearly identify the polygonal area 50.

Cutting the Display List

Referring again to Figs. 8 and 9, the process of cutting the display list 18 makes use of the same procedures used in the display of the image 22. This permits the cutting process to make efficient use of pre-existing hardware and software. In the cutting process each point vector 20 (Fig. 3) in the display list 18 is read, as before, per process block 32. The z-buffer 34 and image buffer 42 are modified, if appropriate, per process blocks 36, 38, 40 and 44. However, at decision block 46, the program proceeds to decision block 58 rather than decision block 47

At decision block 58, the spatial coordinates of the i-th point vector 20 (Fig. 4), $x_i$ and $y_i$, are used to address the cut buffer 56. If the value of the cut buffer 56 at the addressed memory location is one, indicating that the i-th point vector 20 has $x_i$ and $y_i$ coordinates within the polygonal area 50, then the point vector 20 from the original display list 18 at address i is stored in the next free location j of a cut display list 60 as indicated by process block 64 in Fig. 8 and by gate 65 in Fig. 9. Conversely, if the value of that addressed memory location of cut buffer 56 is zero, indicating that the i-th point vector 20 has $x_i$ and $y_i$ coordinates outside the polygonal area 50, then the point vector 20 from display list 18 at address i is stored in the next free location $j'$ of a remainder display list 62 as indicated by process block 66 in Fig. 8 and gate 67 in Fig. 9.

The point vectors 20 (Fig. 4) of the transformed display list 18′ are used to address the cut buffer 56, but the point vectors 20 from original display list 18 are separated into cut and remainder lists 62 and 60. The correspondence between the addresses i for each display list 18 and 18′ makes this a simple matter. The use of the original display list 18 for creating the cut and remainder display lists 60 and 62 preserves the cut point vectors 20 from the errors introduced in the transformation process. It should be apparent, however, that the point vectors 20 from the transformed display list 18′ might also be used to generate the cut and remainder display lists 60 and 62 if such errors were not of concern.

As shown in Fig. 10, the point vectors 20 (Fig. 4) in the cut display list 60 are not only the point vectors 20 associated with pixels 26 visible on the display device 48 within the polygonal area 50 but also "hidden" point vectors 20 having the same x and y spatial coordinates as the visible pixels 26 and effectively "beneath" the polygonal area 50. Thus the cut volume is the volume swept by the polygonal area 50 as it moves along the z axis of the transformed display list 18′. This permits the cut volume to be defined intuitively with respect to the displayed image and permits the rotation of the image per the RTS functional block 30 to define the cut axis. The cut axis may be chosen arbitrarily, depending on the cut desired by the user, and is entered by the interactive procedure of rotating the image so that the cut axis extends away from the viewer.

Thus the display list 18 is rapidly segregated into cut and remainder display lists 60 and 62, as indicated in Fig. 9. These display lists may be saved on an appropriate storage system. Typically this storage system comprises some form of magnetic storage medium such as a floppy disk, hard disk drive, or tape to be recalled at will.

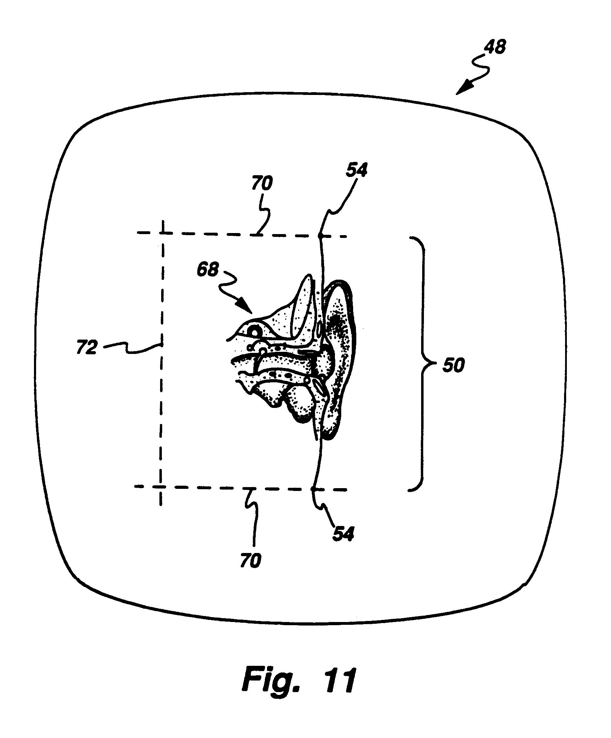

Each display list 60 and 62 may be separately displayed and manipulated or combined with other data for combination images. Referring to Fig. 11, the image from the cut display list 60 is shown rotated 90° and displayed to reveal hidden surfaces 68 not visible in displayed image 22. The cut volume is indicated by dotted lines 70 formed by the edges of the polygonal area 50 as it swept along the z axis of the displayed image 22 and a cut plane 72 previously applied to the display list 18 by the RTS functional block 30 as shown in Fig. 9.

The list format of the display lists 18, 18′, 60, and 62 where the address of the point vectors is arbitrary, makes the production of composite images from several display lists as simple as adding one display list to the end of the another.

A particular advantage of the present invention is in its rapid processing of surface image data so as to provide interactive manipulation of the image including cutting the image into multiple images.

Systems which do not permit interactive use suffer a significant disadvantage because a real time display is required for optimal human interaction with the system. In the case of a surgeon planning a difficult procedure, it is very important for the surgeon to be able to display the structure in question on a screen in three-dimensional form, to cut away blocking structures, and be able to rotate the structure at will without unnecessary delay.

The ability to cut the display list structure directly and to use the image mapping in making that segregation is key to the rapid and interactive processing of the present invention.

While the system and method of the present invention will undoubtedly find its greatest utilization in the analysis and display of tomographic x-ray and magnetic resonance imaging data, the system of the present invention is equally applicable to systems employing ultrasound, position emission tomography, emission computed tomography and multi-modality imaging. Moreover, while the present invention is particularly applicable to medical images, it is also pointed out that the system and method of the present invention is applicable to cutting three-dimensional images from any system which is capable of generating three-dimensional display lists. Also, as will be apparent from the above description, the normals of those display lists need not be gradient normals but may be surface normals indicating the orientation of the surface as may be derived by other means.

While the invention has been described in detail herein in accord with certain preferred embodiments thereof, many modifications and changes therein may be effected by those skilled in the art. Accordingly, it is intended by the appended claims to cover all such modifications and changes as fall within the true spirit and scope of the invention.

## Claims

1. A system for simulating a surgical cutting along a cut axis with respect to a surface structure represented as a first display list of points in three dimensions having associated normals, comprising:

    transformation means operating on the first display list of points for rotating the coordinates of the points;

    mapping means for receiving the points and mapping the rotated coordinates to pixels having pixel coordinates in an image plane to create a two-dimensional representation of the surface structure and such that the points along a line parallel to the cut axis map to a single pixel in the image plane;

    means communicating with the mapping means for describing a polygonal area on the image plane and for identifying the points that map to the polygonal area; and

    means responsive to the identification of the points for storing some points in a second display list.

2. The system as recited in claim 1 including a data entry device for interactively producing the polygon in the image plane and a display means for displaying the superimposed image of the surface structure and the polygon in the image plane.

3. The method of claim 1 including means for operating on the first display list of points for removing points on one side of a three-dimensional cut plane.

4. The system as recited in claim 1 wherein the means responsive to the identification of points creates a second display list of points whose rotated coordinates map to the polygonal area and a third display list of points whose rotated coordinates do not map to the polygonal area.

5. The system as recited in claim 1 wherein the means communicating with the mapping means for describing a polygonal area comprises a cut buffer addressed by pixel coordinates and holding a first value if a pixel coordinate is within the polygonal area.

6. A system for simulating a surgical cutting along a cut axis with respect to a surface structure represented as a first display list of points in three dimensions having associated normals, comprising:

    mapping means for receiving the first display list of points and for generating image plane coordinates for each point to map the points to pixels of an image plane to create a two-dimensional representation of the surface structure;

    a cut buffer describing a polygonal area in the image plane, the cut buffer addressed by image plane coordinates and holding a first value if an image plane coordinate is within the polygonal area;

    comparison means communicating with the cut buffer for comparing the image plane coordinates of said points to the image plane coordinates of the polygonal area by checking whether the address of the cut buffer equal to the image plane coordinates holds the first value; and

    segregating means for generating a second display list of points from the first display list of points depending on the results of the comparison by said comparison means.

7. The system as recited in claim 6 wherein the segregating means stores a point in a second display list of points if the address of the cut buffer equal to the image plane coordinates of said point holds the first value and stores said point in a third display list otherwise.

8. The system as recited in claim 6 wherein each point in the first display list is associated with a color and including:

    image buffer means for receiving the image plane coordinates for each point in the first display list and for storing the color of the point at said image plane coordinates if the z coordinate of the point along a dimension normal to the image plane is closer to the image plane than any previously stored points having the same image plane coordinates and erasing the previously stored color for those coordinates; and

    display means for displaying the stored colors at the corresponding image plane coordinates.

9. The system as recited in claim 8 wherein said color comprises a dot product of a normal associated with said point and a predetermined illumination axis.

10. The system as recited in claim 6 including a data entry device for interactively producing a polygonal area in the image plane, and display means for displaying the superimposed image of the surface structure and the polygonal area in the image plane.

11. The method of claim 6 including means for operating on the first display list of points to remove points on one side of a three-dimensional cut plane.

**Fig. 1**

**Fig. 2**

**Fig. 3**

**Fig. 4** (reference 18, 20)

| $i = 1$ | $x_1,$ | $y_1,$ | $z_1,$ | $n_{x1},$ | $n_{y1},$ | $n_{z1}$ |
| 2 | $x_2,$ | $y_2,$ | $z_2,$ | $n_{x2},$ | $n_{y2},$ | $n_{z2}$ |
| 3 | $x_3,$ | $y_3,$ | $z_3,$ | $n_{x3},$ | $n_{y3},$ | $n_{z3}$ |
| 4 | $x_4,$ | $y_4,$ | $z_4,$ | $n_{x4},$ | $n_{y4},$ | $n_{z4}$ |
| 5 | | | | | | |

**Fig. 5** (reference 42)

| | $x' = 1$ | 2 | 3 | 4 |
|---|---|---|---|---|
| $y' = 1$ | $COLOR_{50}$ | $COLOR_{18}$ | $COLOR_{155}$ | COLOR |
| 2 | $COLOR_{11}$ | $COLOR_{67}$ | COLOR | |
| 3 | $COLOR_{100}$ | $COLOR_2$ | | |
| 4 | $COLOR_{12}$ | $COLOR_{108}$ | | |
| 5 | COLOR | | | |

**Fig. 6** (reference 34)

| | $x' = 1$ | 2 | 3 | 4 |
|---|---|---|---|---|
| $y' = 1$ | $z_{50}$ | $z_{18}$ | $z_{155}$ | |
| 2 | $z_{11}$ | $z_{67}$ | $z$ | |
| 3 | $z_{100}$ | $z_2$ | | |
| 4 | $z_{12}$ | $z_{108}$ | | |
| 5 | $z$ | | | |

**Fig. 7** (reference 56)

| | $x' = 1$ | 2 | 3 | 4 |
|---|---|---|---|---|
| $y' = 1$ | 0 | 0 | 0 | |
| 2 | 0 | 1 | 0 | |
| 3 | 0 | 1 | 0 | |
| 4 | 0 | 1 | | |
| 5 | 0 | | | |

ENTER

READ NEXT $x_i, y_i, z_i, n_{xi}, n_{yi}, n_{zi}$ — 32

36 — $z_i < z_{BUFF}(x_i, y_i)$ ? — NO

YES

38 — $z_i \rightarrow z_{BUFF}(x_i, y_i)$

40 — CALCULATE COLOR $(i)$

44 — COLOR $(i) \rightarrow$ IMAGE BUFF $(x_i, y_i)$

46 — CUT DISPLAY LIST ? — NO

YES

58 — CUT BUFF $(x_i, y_i) = 1$ ? — NO

YES

64 — $x_i, y_i, z_i, n_{xi}, n_{yi}, n_{zi} \rightarrow$ CUT DISP. LIST $(j)$

66 — $x_i, y_i, z_i, n_{xi}, n_{yi}, n_{zi} \rightarrow$ REM. DISP. LIST $(j)$

ALL POINT DATA READ ? — NO

47 — YES

*Fig. 8*

13

Fig. 9

EP 0 501 812 A2

Fig. 10

**Fig. 11**